# EUROPEAN PATENT APPLICATION

(11) **EP 3 179 206 A1**
(43) Date of publication of application: **14.06.2017**
(21) Application number: 16202213.1
(22) Date of filing: 05.12.2016
(51) Int. Cl.: G01B 15/06, F01D 5/28, C23C 24/00

(54) **COMPONENTS WITH EMBEDDED STRAIN SENSORS AND METHODS FOR MONITORING THE SAME**

(30) Priority: 10.12.2015 US 201514964816
(71) Applicant: General Electric Company, Schenectady, NY 12345 (US)
(72) Inventor: SALM, Jacob Andrew, Greenville, SC 29615 (US); BATZINGER, Thomas James, Schenectady, NY 12345 (US); GERMANN, Bryan Joseph, Greenville, SC 29615 (US); WARD, John David, Greenville, SC 29615 (US); RANSON, William Farris, Greenville, SC 29615 (US)
(74) Representative: Pöpper, Evamaria

(57) **Abstract**

Components (10) can comprise a substrate (11), an embedded strain sensor (40) comprising at least two reference points disposed on the substrate (11), and an outer coating (50) disposed over at least a portion of the embedded strain sensor (40).

## Description

### BACKGROUND OF THE INVENTION

The subject matter disclosed herein relates to strain sensors and, more specifically, to components with embedded strain sensors and methods for monitoring the same.

Some components may need to operate in environments comprising elevated temperatures and/or corrosive conditions. For example, turbomachines are widely utilized in fields such as power generation and aircraft engines. Depending on the overall configuration of the turbomachine (i.e., the incorporation of gas turbines, steam turbines and/or generators), such turbomachine systems may including one or more compressor sections, combustor sections, turbine sections, steam path sections and/or generator sections. The compressor section is configured to compress air as the air flows through the compressor section. The air is then flowed from the compressor section to the combustor section, where it is mixed with fuel and combusted, generating a hot gas flow. The hot gas flow is provided to the turbine section, which utilizes the hot gas flow by extracting energy from it to power the compressor, an electrical generator, and other various loads. The steam path section may utilize the flow of any steam in the turbomachine system (such as that created from a heat recovery steam generator) to extract energy from it for power generation. Likewise, the generator section may covert rotational movement from a turbine section (e.g., gas or steam turbine section) into electricity.

During operation of a turbomachine, various components (collectively known as turbine components) within the turbomachine and particularly within the turbine section or generator section of the turbomachine, such as turbine blades, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation.

While various tools may be utilized to measure imparted stress and strain in relatively standard environments, turbine and other components in may experience hotter and/or more corrosive working conditions that may be unsuitable for such measurement tools.

Accordingly, alternative components with embedded strain sensors and methods for monitoring the same would be welcome in the art.

### BRIEF DESCRIPTION OF THE INVENTION

In one embodiment, a component is disclosed. The component can comprise a substrate, an embedded strain sensor comprising at least two reference points disposed on the substrate, and an outer coating disposed over at least a portion of the embedded strain sensor.

In another embodiment, another component is disclosed. The component can comprise a substrate, one or more intermediate coatings disposed on at least a portion of the substrate, an embedded strain sensor comprising at least two reference points disposed on the one or more inner coatings, and an outer coating disposed over at least a portion of the embedded strain sensor.

In yet another embodiment, a method for monitoring a component is disclosed. The method includes applying an electromagnetic radiation to the component, wherein the component comprises an embedded strain sensor comprising at least two reference points disposed on a substrate and an outer coating disposed over at least a portion of the embedded strain sensor. The method further includes measuring a second distance between the at least two reference points at a second time interval via the interaction of the electromagnetic radiation and the embedded strain sensor, and comparing the second distance to a first distance between the at least two reference points measured from a first time interval.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary component comprising an embedded strain sensor according to one or more embodiments shown or described herein;
FIG. 2 is an exemplary embedded strain sensor according to one or more embodiments shown or described herein;
FIG. 3 is cross section of an exemplary component according to one or more embodiments shown or described herein;
FIG. 4 is a cross section of another exemplary component according to one or more embodiments shown or described herein; and,
FIG. 5 is an exemplary method for monitoring a component according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

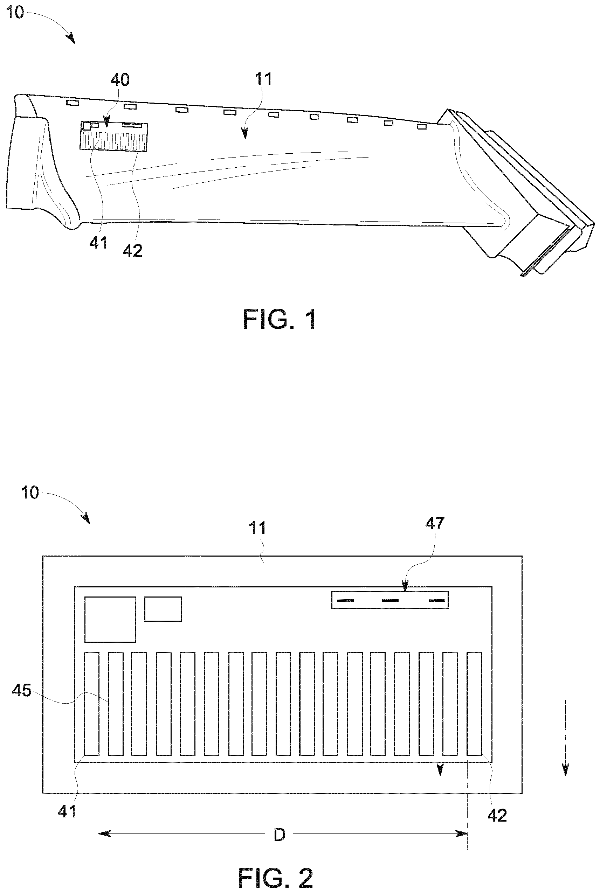

Referring now to FIG. 1, a component 10 generally comprises a substrate 11, an embedded strain sensor 40 comprising at least two reference points 41 and 42 disposed on the substrate 11, and an outer coating 50 disposed over at least a portion of the embedded strain sensor 40.

The component 10 (and more specifically the substrate 11 of the overall component 10) can comprise a variety of types of components used in a variety of different applications, such as, for example, components utilized in high temperature applications (e.g., components comprising nickel or cobalt based superalloys). In some embodiments, the component 10 may comprise an industrial gas turbine, steam turbine or generator component such as a combustion component, hot gas path component, steam path component or generator component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

Referring now to FIGS. 1-5, the embedded strain sensor 40 is deposited on a portion of the exterior surface of the substrate 11 of the overall component 10. The embedded strain sensor 40 generally comprises at least two reference points 41 and 42 that can be used to measure the distance D between said at least two reference points 41 and 42 at a plurality of time intervals. As should be appreciated to those skilled in the art, these measurements can help determine the amount of strain, strain rate, creep, fatigue, stress, etc. at that region of the component 10. The at least two reference points 41 and 42 can be disposed at a variety of distances and in a variety of locations depending on the specific component 10 so long as the distance D there between can be measured. Moreover, the at least two reference points 41 and 42 may comprise dots, lines, circles, boxes or any other geometrical or non-geometrical shape so long as they are consistently identifiable and may be used to measure the distance D there between.

The embedded strain sensor 40 may further comprise a material that is readable through the outer coating 50. In such embodiments, the outer coating 50 may cover the embedded strain sensor 40 to help protect it from the operating environment of the component 10 (e.g., elevated temperatures in an industrial gas turbine) while an operator may still measure the embedded strain sensor 40. Depending on the type of outer coating 50 and/or the detection (e.g., reading or measurement) technique utilized, the embedded strain sensor 40 may further comprise any material or materials that help differentiate it from the substrate 11.

In some embodiments, the embedded strain sensor 40 may comprise a material that is excited by a specific wavelength in the electromagnetic spectrum. For example, the embedded strain sensor 40 may be excited by X-rays, UV radiation, infrared radiation, microwaves or even radio waves. This excitable reaction may be utilized when reading the embedded strain sensor 40 to determine the distance between the at least two reference points 41 and 42. Moreover, when the embedded strain sensor 40 is excited by wavelengths outside of the visible light spectrum, the embedded strain sensor 40 may still be read even when the outer coating 50 comprises a non-transparent material that would impede visual readings of the first and second reference points 41 and 42. For example, the embedded strain sensor may comprise tungsten or platinum such that it can be measured via X-ray or CT detection methods.

In some embodiments, the embedded strain sensor 40 may simply comprise a material that is denser than the substrate 11 such that it stands out via X-ray or CT detection methods. For example, if the substrate 11 comprises a nickel or cobalt superalloy (e.g., a turbine component), the embedded strain sensor 40 may comprise a material more dense than the nickel or cobalt superalloy. In some embodiments, the material may be doped with materials that react differently to X-ray or CT detection methods. For example, the embedded strain sensor 40 may comprise a thermal barrier coating such as yttria-stabilized zirconia (also referred to as YSZ) that is doped with barium such that the barium is readable via X-ray, CT or fluoroscopy detection methods.

In some embodiments, the embedded strain sensor 40 may comprise a visibly transparent material (e.g., glass) that may show up as opaque when using various infrared imaging methods such as mid-wavelength infrared, short-wavelength infrared, long-wavelength infrared or far-infrared methods.

In some embodiments, the embedded strain sensor 40 may cause a profile change in the surface of the substrate 11 such that the reflection of the embedded strain sensor 40 may be measured via ultrasound (e.g., phased array) or acoustic microscopy. In some embodiments, the embedded strain sensor 40 may comprise a different conductivity or reflectivity than the substrate 11 such that it can be detected using eddy current or laser reflectometry respectively. In even some embodiments, the embedded strain sensor 40 may comprise material or materials that polarize different oxide coatings and modulate thickness such that it can be detected using Raman spectroscopy.

As best illustrated in FIGS. 2, the embedded strain sensor 40 may comprise a variety of different configurations and cross-sections such as by incorporating a variety of differently shaped, sized, and positioned reference points 41 and 42. For example, as illustrated in FIG. 2, the embedded strain sensor 40 may comprise a variety of different reference points comprising various shapes and sizes. Such embodiments may provide for a greater variety of distance measurements D such as between the outer most reference points (as illustrated), between two internal reference points, or any combination there between. The greater variety may further provide a more robust strain analysis on a particular portion of the component 10 by providing strain measurements across a greater variety of locations.

Furthermore, the dimensions of the embedded strain sensor 40 may depend on, for example, the component 10, the location of the embedded strain sensor 40, the targeted precision of the measurement, deposition technique, and detection (e.g., reading or measuring) technique. For example, in some embodiments, the embedded strain sensor 40 may comprise a length and width ranging from less than 1 millimeter to greater than 300 millimeters. Moreover, the embedded strain sensor 40 may comprise any thickness that is suitable for deposition and subsequent optical identification without significantly impacting the performance of the underlying component 10. For example, in some embodiments, the embedded strain sensor 40 may comprise a thickness of less than from about .1 millimeters to greater than 1 millimeter. In some embodiments, the embedded strain sensor 40 may have a substantially uniform thickness. Such embodiments may help facilitate more accurate measurements for subsequent strain calculations between the first and second reference points 41 and 42.

In some embodiments, the embedded strain sensor 40 may comprise a positively deposited square or rectangle wherein the first and second reference points 41 and 42 comprise two opposing sides of said square or rectangle. In other embodiments, the embedded strain sensor 40 may comprise at least two deposited reference points 41 and 42 separated by negative space 45 (i.e., an area in which embedded strain sensor 40 material is not deposited).

As illustrated in FIG. 2, in even some embodiments, the embedded strain sensor 40 may be deposited to form a unique identifier 47 (hereinafter "UID"). The UID 47 may comprise any type of barcode, label, tag, serial number, pattern or other identifying system that facilitates the identification of that particular embedded strain sensor 40. In some embodiments, the UID 47 may additionally or alternatively comprise information about the component 10 (e.g., turbine component) or the system or machine that the component 10 is incorporated into (e.g., gas or steam turbine). The UID 47 may thereby assist in the identification and tracking of particular embedded strain sensors 40, components 10 or even overall systems or machines to help correlate measurements for past, present and future operational tracking.

The component 10 further comprises an outer coating 50 that is disposed over at least a portion of the embedded strain sensor 40. The outer coating 50 can help protect the embedded strain sensor 40 and potentially the substrate 11 from the operating environment of the component 10 (e.g., elevated temperatures in an industrial gas turbine). For example, the embedded strain sensor 40 may be subject to edge degradation due to corrosion and/or erosion but for the protection of the outer coating 50.

The outer coating 50 can comprise a variety of materials based in part, for example, on the environment of the component 10. In some embodiments, the outer coating 50 can comprise a ceramic material that may provide increased temperature survivability. For example, in some embodiments, the ceramic material may comprise a thermal barrier coating such as yttria-stabilized zirconia (also referred to as YSZ). In such embodiments, the YSZ may comprise, for example, YSZ-D111. In even some embodiments, the outer coating 50 may comprise a metallic bond coat and/or thermally grown oxide to assist in the deposition of the ceramic top coat (e.g., YSZ). In some embodiments, the outer coating 50 may comprise a gel coating such as gel aluminide.

In some embodiments, the outer coating 50 may comprise a dissolvable material. For example, the outer coating 50 may dissolve via water or another solution to expose the embedded strain sensor 40 for measurements. In other embodiments, the outer coating 50 may be removable such as by melting, scraping or other suitable means. In such embodiments, the outer coating 50 may be sacrificial such that it protects the embedded strain sensor 40 during operation of the substrate 11, but is then removed before additional readings of the embedded strain sensor 40 may be taken.

In some embodiments, the outer coating 50 may only cover a portion of the embedded strain sensor 40 such as only the outer edges, or only one or more surface areas. However, in some embodiments, the outer component 50 can cover the entire embedded strain sensor 40. Moreover, in some embodiments, the outer coating 50 may also be disposed over at least a portion of the substrate 11. In such embodiments, the outer coating 50 may help protect both the embedded strain sensor 40 and the substrate 11 from operating conditions.

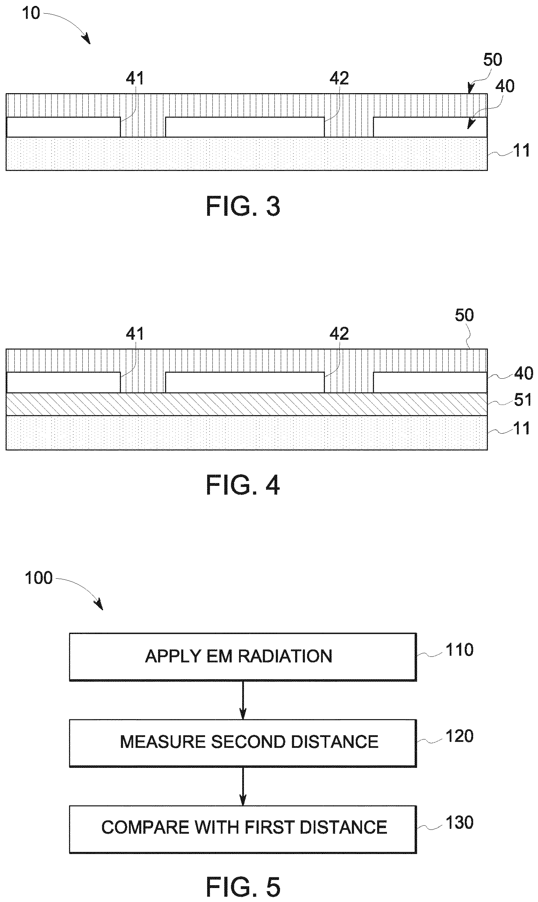

Moreover, substrate 11, the embedded strain sensor 40 and the outer coating 50 may be disposed in a variety of relative configurations. For example, as illustrated in FIG. 3, in some embodiments, the embedded strain sensor 40 may be disposed directly on the substrate 11 and the outer coating 50 may be disposed over both the embedded strain sensor 40 and the substrate 11. In some embodiments, such as that illustrated in FIG. 4, one or more intermediate coatings 51 may be applied between the substrate 11 and the embedded strain sensor 40. The outer coating 50 may then be disposed only over the embedded strain sensor 40 or may be disposed over both the embedded strain sensor 40 and the one or more intermediate coatings 51 as shown.

The embedded strain sensor 40 may be deposited in one or more of a variety of locations on the substrate 11. For example, if the substrate comprises a turbine component, the embedded strain sensor 40 may be deposited on a turbine blade, compressor blade, vane, nozzle, shroud, rotor, transition piece or casing. In such embodiments, the embedded strain sensor 40 may be deposited in one or more locations known to experience various forces during unit operation such as on or proximate airfoils, platforms, tips or any other suitable location. Moreover, since the embedded strain sensor 40 is at least partially protected by the outer coating, the embedded strain sensor 40 may be deposited in one or more locations known to experience elevated temperatures (wherein strain sensors comprising other materials may corrode and/or erode). For example the embedded strain sensor 40 may be deposited on a hot gas path or combustion turbine component.

In even some embodiments, multiple embedded strain sensors 40 may be deposited on a single turbine component or on multiple turbine components. For example, a plurality of embedded strain sensors 40 may be deposited on a single turbine component (e.g., a turbine blade) at various locations such that the strain may be determined at a greater number of locations about the individual turbine component. Alternatively or additionally, a plurality of like turbine components (e.g., a plurality of turbine blades), may each have an embedded strain sensor 40 deposited in a standard location so that the amount of strain experienced by each specific turbine component may be compared to other like turbine components. In even some embodiments, multiple different turbine components of the same turbine unit (e.g., turbine blades and vanes for the same turbine) may each have an embedded strain sensor 40 deposited thereon so that the amount of strain experienced at different locations within the overall turbine may be determined.

Referring additionally to FIG. 5, another method 100 is illustrated for monitoring a component 10. Method 100 first comprises applying an electromagnetic radiation to the component 10 in step 110, wherein the component 10 comprises the embedded strain sensor 40 comprising at least two reference points 41 and 42 and the outer coating 50 disposed over at least a portion of the embedded strain sensor. Applying electromagnetic radiation in step 110 may be facilitated through any suitable method such as via X-ray or CT detection methods.

The method 100 further comprises measuring a second distance D between the at least two reference points 41 and 42 at a second time interval via the interaction of the electromagnetic radiation and the embedded strain sensor 40 in step 120. Specifically, the embedded strain sensor 40 may be excited by the electromagnetic radiation so that the locations of the first and second reference points 41 and 42 may be identified such that the distance there between D can be measured.

Finally, method 100 comprises comparing the second distance D first distance D between the at least two reference points 41 and 42 from a first time interval. The first distance D measured at the first time interval may have been determined at any earlier point in time such that the difference in distances between the first time interval and second time interval enable a determination of strain. For example, the first distance may have been measured at a first time interval before the substrate 11 (e.g., turbine component) was even utilized in a larger system or machine (e.g., turbine).

It should now be appreciated that embedded strain sensors may be protected by an outer coating to help maintain the integrity and precision of the embedded strain sensor. The embedded strain sensor may then be measured through the coating such as be exciting the embedded strain sensor material via the application of energy, or by removing the outer coating all together. The embedded strain sensors may thereby facilitate the monitoring of the component's performance while withstanding the potentially harsh operating conditions.

## Claims

1. A component (10) comprising:
a substrate (11);
an embedded strain sensor (40) comprising at least two reference points disposed on the substrate (11); and,
an outer coating (50) disposed over at least a portion of the embedded strain sensor (40).

2. The component (10) of claim 1, wherein the outer coating (50) covers the entire embedded strain sensor (40).

3. The component (10) of claim 1, wherein a plurality of coatings are disposed over at least a portion of the embedded strain sensor (40).

4. The component (10) of claim 1, wherein the outer coating (50) comprises a bond coat or a thermal barrier coating.

5. The component (10) of claim 1, wherein the outer coating (50) comprises a non-transparent material.

6. The component (10) of claim 1, wherein the outer coating (50) is also disposed over at least a portion of the substrate (11).

7. The component (10) of claim 1, wherein the embedded strain sensor (40) comprises a material that is excited by a wavelength in the electromagnetic spectrum.

8. The component (10) of claim 1, wherein the substrate (11) comprises a turbine component.

9. The component (10) of claim 1, wherein the substrate (11) comprises a nickel or cobalt based superalloy, and wherein the embedded strain sensor (40) comprises a material more dense than the nickel, cobalt based superalloy, or a material that is excited by a wavelength in the electromagnetic spectrum.

10. A component (10) comprising:
a substrate (11);
one or more intermediate coatings disposed on at least a portion of the substrate (11);
an embedded strain sensor (40) comprising at least two reference points disposed on the one or more inner coatings; and,
an outer coating (50) disposed over at least a portion of the embedded strain sensor (40).

11. The component (10) of claim 10, wherein the substrate (11) comprises a turbine component.

12. The component (10) of claim 1, wherein the outer coating (50) comprises a thermal barrier coating or a non-transparent material, wherein the one or more intermediate coatings comprises a bond coat.

13. A method (100) for monitoring a component (10), the method (100) comprising:
applying (110) an electromagnetic radiation to the component (10), wherein the component (10) comprises an embedded strain sensor (40) comprising at least two reference points disposed on a substrate (11) and an outer coating (50) disposed over at least a portion of the embedded strain sensor (40);
measuring (120) a second distance between the at least two reference points at a second time interval via the interaction of the electromagnetic radiation and the embedded strain sensor (40); and,
comparing (130) the second distance to a first distance between the at least two reference points measured from a first time interval.

14. The method (100) of claim 13, wherein applying (110) the electromagnetic radiation comprises applying x-rays.

15. The method (100) of claim 13, wherein the substrate (11) comprises a turbine component.
